# EUROPEAN PATENT APPLICATION

(11) **EP 1 154 178 A2**
(43) Date of publication of application: **14.11.2001**
(21) Application number: 01303899.7
(22) Date of filing: 30.04.2001
(51) Int. Cl.: F16K 27/00

(54) **Piston actuated valve**

(30) Priority: 08.05.2000 JP 2000134833
(71) Applicant: SMC CORPORATION, Minato-ku, Tokyo (JP)
(72) Inventor: Sakurai, Toyonobu, SMC Corp. Tsukuba Tech. Ctr., Tsukuba-gun, Ibaraki (JP)
(74) Representative: Findlay, Alice Rosemary

(57) **Abstract**

Two control valves 2A and 2B each include a valve mechanism portion 4A, 4B for opening and closing a fluid flow path 12a by displacement of a diaphragm valve 14 and a cylinder operating portion 5A, 5B for opening and closing the diaphragm valve 14 with a valve rod 25 to which a plurality of pistons 24 are connected. The control valves 2A and 2A are provided in casings 7 and 8 connected to each other, whereby the control valves 2A and 2B are integrated with each other. Flow paths 12b, 12b for connecting the control valves 2A and 2B are provided in the casing 7.

## Description

The present invention relates to a cylinder operated combination valve which comprises cylinder operated control valves in which valve members are opened and closed with fluid pressure cylinders.

It is known to use a cylinder operated control valve in which a valve member is opened and closed with a fluid pressure cylinder as a control valve for controlling fluid such as gas. This type of control valve is used, for example, in manufacture of a semiconductor device, the valve controlling a flow of process gas or replacing the process gas with purge gas. A plurality of control valves are combined with other control devices and disposed on a unit substrate to thereby form a process gas line. FIG. 5 shows an example of a control unit forming such a process gas line. This control unit is formed by mounting a hand-operated valve 53, a pressure reducing valve 54, a pressure transducer 55, an auto-filter 56, a two-port control valve 57, a three-port control valve 58, a mass flow controller 59, a three-port control valve 58, and a two-port control valve 57 in order on a unit substrate 51 having inside itself a gas flow path 52 for connecting the control devices. An inlet port 60 and an outlet port 61 for the process gas are provided to opposite ends of the substrate 51.

In such a process gas control unit, the two control valves 57 and 58 are arranged on each of front and rear sides of the mass flow controller 59. Because it is necessary to provide individual fixing means such as bolts for the two control valves 57, 58, and the unit substrate 51, mounting of them is burdensome. Moreover, they each occupy a separate fixing space, which hinders miniaturisation of the unit. Because the two control valves 57 and 58 are connected to each other through the flow path 52a provided inside the substrate 51, the flow path is long. As a result, when opening and closing the control valve 58 to replace process gas with purge gas from a purge gas flow path 62 dead-spots are inevitably increased and replacement is likely to decrease.

It is an object of the present invention to provide a cylinder operated combination valve which is suitable especially for use for a process gas line, which can be easily mounted to a unit substrate, the mounting space of which is small, and which has excellent purge gas replaceability.

According to the present invention, there is provided a cylinder operated combination valve formed by integrating two control valves each including a valve mechanism portion for opening and closing a fluid flow path by displacement of a diaphragm valve and a cylinder operating portion for opening and closing the diaphragm valve, wherein each the valve mechanism portion includes a valve seat provided at an intermediate portion of the fluid flow path, the diaphragm valve for coming in contact with and separating from the valve seat to open and close the fluid flow path and applied with elastic force in such a direction as to separate from the valve seat, and a valve hole in which the valve seat and the diaphragm valve are provided, the two valve mechanism portions are incorporated into one valve casing, a fluid flow path for connecting the two valve mechanism portions is provided in the valve casing, each the cylinder operating portion includes a valve rod for moving forward and rearward to open and close the diaphragm valve with a tip end portion which enters the valve hole, a plurality of pistons mounted to the valve rod, pressure chambers formed at one pressure receiving face of the pistons, an operating port for supplying pressure fluid to the respective pressure chambers, a connecting hole for connecting the operating port and the respective pressure chambers, and a valve spring for biasing the diaphragm valve in a valve closing direction when the diaphragm valve is seated on the valve seat, and the two cylinder operating portions are incorporated into one cylinder casing connected to the valve casing.

In the combination valve having the above structure, the two cylinder operated control valves are provided in one valve casing and one cylinder casing which are connected to each other and the valves are thereby integrated with each other. Therefore, the combination valve can be mounted to a unit substrate of a process gas control unit, for example, by the same number of processes as one control valve. Therefore, mounting of the combination valve is easy and requires small space. Moreover, because the two control valves can be connected by a short flow path in the valve casing, dead-spots on replacement of process gas with purge gas are reduced substantially and, as a result, replaceability is enhanced as compared with prior art apparatus in which control valves are connected by a long flow path provided in a unit substrate. Because each the cylinder operating portion has the plurality of pistons and the operating force of the valve rod in opening and closing the diaphragm valve is the sum of fluid pressure operating forces generated in the plurality of pistons, a large operating force can be obtained even if the combination valve is miniaturised and the pistons have small diameters.

In one embodiment, the valve casing has a mounting face to be mounted to a unit substrate of a process gas control unit on an end face opposite to a side connected to the cylinder casing and a plurality of ports communicating with the fluid flow path are provided to the mounting face.

In another embodiment, the cylinder casing has two cylinder bores extending in parallel to each other, an inside of each the cylinder bore is partitioned into a plurality of piston chambers with a plurality of partitions each formed of a disc-shaped member, and the pistons are each formed of a disc-shaped member having substantially the same form as that of the partitions and are housed in the piston chambers.

The two cylinder operating portions may share one operating port and the operating port communicates with the respective pressure chambers of the two cylinder operating portions. It is also possible that the two cylinder operating portions have individual operating ports and each operating port communicates with the respective pressure chambers of the corresponding cylinder operating portion through the connecting hole formed in the valve rod. In the former case, the two control valves can be operated simultaneously by supplying pressure fluid through the operating port. In the latter case, the two control valves can be operated individually by supplying pressure fluid from the individual operating ports.

The two control valves may either or both be of a normally closed type in which the diaphragm valve is normally in a closed state or a normally opened type in which the diaphragm valve is normally in an open state.

When the control valve is of the normally closed type, the valve spring is disposed between the valve rod and the cylinder casing to thereby move the valve rod forward with repulsing force of the valve spring to seat the diaphragm valve on the valve seat and the pressure chambers are respectively formed at first pressure receiving faces of the respective pistons such that a rearward operating force is generated in the valve rod by fluid pressure acting on the respective pistons.

In the normally opened control valve, a movable member for pressing the diaphragm valve in a seating direction is provided to the tip end of the valve rod, the movable member is biased forward by the valve spring, and the pressure chambers are respectively formed at second pressure receiving faces of the respective pistons such that a forward operating force is generated in the valve rod by fluid pressure acting on the respective pistons.

A pressing member for transmitting the operating force of the valve rod to the diaphragm valve may be disposed between the tip end of the valve rod and the diaphragm valve.

The invention will now be further described by way of example only with reference to the accompanying drawings in which

FIG. 1 is a sectional view of a first embodiment of a cylinder operated combination valve according to the present invention.

FIG. 2 is a plan view of FIG. 1.

FIG. 3 is a sectional view of a second embodiment of the cylinder operated combination valve according to the invention.

FIG 4 is a plan view of FIG. 3.

Fig. 5 is a sectional view of a known example of a control unit forming a process gas line.

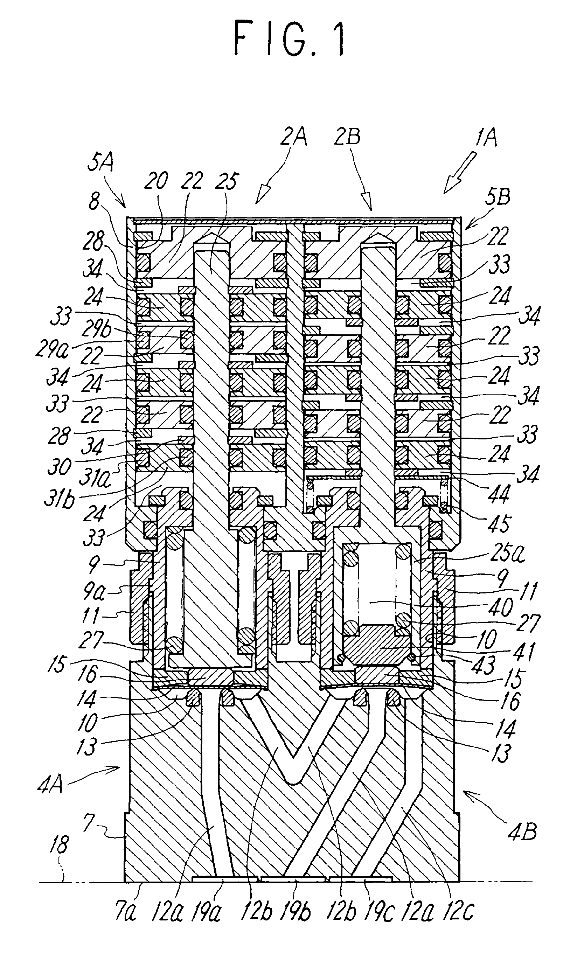

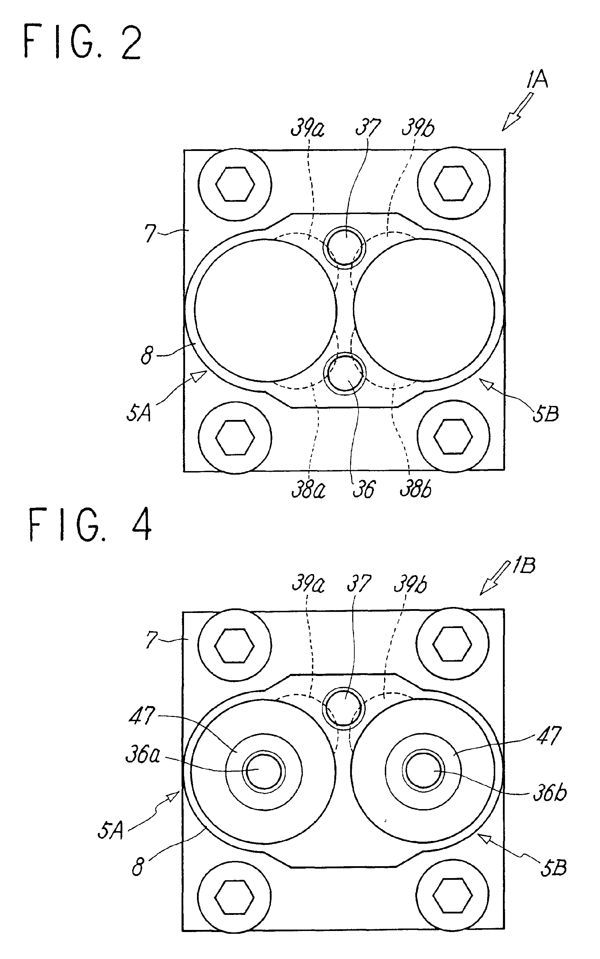

FIGS. 1 and 2 show a first embodiment of a cylinder operated combination valve. This combination valve 1A is formed by integrally connecting a normally closed first control valve 2A in which a closed state of the valve is maintained in non-operation and a normally opened second control valve 2B in which an open state of the valve is maintained in non-operation.

The respective control valves 2A and 2B are respectively formed of valve mechanism portions 4A and 4B for opening and closing fluid flow paths by displacements of diaphragm valves 14 and cylinder operating portions 5A and 5B for opening and closing the diaphragm valves 14. The first valve mechanism portion 4A of the first control valve 2A and the second valve mechanism portion 4B of the second control valve 2B share one valve casing 7 and are arranged and incorporated in parallel in the valve casing 7 and the first cylinder operating portion 5A of the first control valve 2A and the second cylinder operating portion 5B of the second control valve 2B share one cylinder casing 8 connected to the valve casing 7 and are arranged and incorporated in parallel in the cylinder casing 8.

The cylinder casing 8 includes sleeves 9 for connecting and having base end portions mounted to the cylinder casing 8. By fitting tip ends of the sleeves 9 in valve holes 10 in the valve casing 7 and screwing nut members 11 engaged with flange portions 9a at outer peripheries of the sleeves 9 over the valve casing 7, the cylinder casing 8 is connected to the valve casing 7.

Next, a concrete structure of the first control valve 2A will be described. The first control valve 2A is a normally closed two-port valve and has the first valve mechanism portion 4A and the first cylinder operating portion 5A. The first valve mechanism portion 4A includes a first flow path 12a and a second flow path 12b formed in the valve casing 7, the valve hole 10 into which the flow paths 12a and 12b open, a valve seat 13 formed in the valve hole 10 to surround an opening portion of the first flow path 12a, and the diaphragm valve 14 for coming in contact with and separating from the valve seat 13 to open and close the first flow path 12a. The diaphragm valve 14 is made of metal, disposed with its outer peripheral portion sandwiched between an annular diaphragm valve retainer 15 and an inner bottom portion of the valve hole 10, and applied with elastic force in such a direction as to separate from the valve seat 13. A pressing member 16 for coming in contact with a back face of the diaphragm valve 14 and for displacement in opening and closing directions with the diaphragm valve 14 is fitted for sliding in a central hole of the diaphragm valve retainer 15.

An end face of the valve casing 7 opposite to a side to which the cylinder casing 8 is connected is formed with a mounting face 7a to be mounted to a unit substrate 18 of a process gas control unit and a port 19a communicating with the first flow path 12a opens in the mounting face 7a. The second flow path 12b directly communicates with the second flow path 12b of the second control valve 2B in the valve casing 7.

On the other hand, the first cylinder operating portion 5A has a cylinder bore 20 formed in the cylinder casing 8. An inside of the cylinder bore 20 is partitioned into a plurality of piston chambers with a plurality of partitions 22, a piston 24 is disposed for sliding in each the piston chamber, and the respective pistons 24 are mounted to a valve rod 25 which passes for sliding through central portions of the respective partitions 22. A tip end of the valve rod 25 extends from the cylinder casing 8 into the sleeve 9 to a position close to the diaphragm valve 14 in the valve hole 10 and is in contact with the pressing member 16. A valve spring 27 is provided between the tip end of the valve rod 25 and the cylinder casing 8, the valve rod 25 is constantly pushed toward the diaphragm valve 14 by repulsing force of the valve spring 27, and the diaphragm valve 14 is pressed against the valve seat 13 through the pressing member 16 by the repulsing force of the valve spring 27 to close the first flow path 12a. Therefore, the valve spring 27 generates force for seating the diaphragm valve 14 in valve closing when the diaphragm valve 14 is seated on the valve seat 13. The first flow path 12a is opened by separating of the diaphragm valve 14 from the valve seat 13 by means of elastic force of the diaphragm valve 14 when the valve rod 25 moves rearward.

Each of the partitions 22 is formed of a disc-shaped member formed separately from the cylinder casing 8. Each member is mounted inside the cylinder casing 8 by using a snap ring 28 provided to an inner peripheral face of the cylinder bore 20 and O-rings 29a and 29b for sealing an outer periphery of the member and the inner peripheral face of the cylinder casing 8 and for sealing an inner periphery of the member and an outer peripheral face of the valve rod 25 are respectively mounted to the outer and inner peripheries of the member.

On the other hand, the piston 24 is formed of a disc-shaped member having substantially the same structure as that of the partition 22 and mounted to the valve rod 25 by using a snap ring 30 provided to the outer peripheral face of the valve rod 25 and O-rings 31a and 31b for sealing an outer periphery of the piston 24 and the inner peripheral face of the cylinder casing 8 and for sealing an inner periphery of the piston 24 and the outer peripheral face of the valve rod 25 are respectively mounted to the outer and inner peripheries of the piston 24.

A pressure chamber 33 for applying fluid pressure to each the piston 24 is formed on a first pressure receiving face side (a lower face side in the shown example) of each the piston 24 and a breathing chamber 34 is formed on an opposite second pressure receiving face side (an upper face side in the shown example). On an upper face of the cylinder casing 8, an operating port 36 for supplying pressure fluid such as compressed air to the respective pressure chambers 33 and a breathing port 37 for discharging exhaust from the respective breathing chambers 34 are provided. The operating port 36 is connected to the respective pressure chambers 33 and the breathing port 37 is connected to the respective breathing chambers 34 respectively through connecting holes 38a and 39a formed in the cylinder casing 8.

In the first control valve 2A, when the pressure fluid is not supplied from the operating port 36 to each the pressure chamber 33, the valve rod 25 is moved forward by repulsing force of the valve spring 27 to press the diaphragm valve 14 against the valve seat 13 through the pressing member 16. Therefore, the first flow path 12a is closed.

If the pressure fluid is supplied from the operating port 36 to each the pressure chamber 33, each piston 24 is driven by the fluid pressure and the valve rod 25 moves rearward. Therefore, the diaphragm valve 14 separates from the valve seat 13 due to its own elasticity and the valve is opened. The operating force of the valve rod 25 at this time is the sum of the operating forces generated in the plurality of pistons 24. With three pistons 24 as shown in the drawings, the operating force is three times the force acting on the one piston 24. Therefore, it is possible to obtain large operating force even if the combination valve is miniaturized and the piston 24 has a small diameter. Because the plurality of pistons 24 are housed in the one cylinder casing 8, there are advantages that the structure is simple, processing and assembly are easy, and accuracy can be easily obtained as compared with a case in which a plurality of cylinders are used by connecting the cylinders in tandem connection.

If the pressure fluid in each the pressure chamber 33 is discharged, the valve rod 25 is moved forward by the repulsing force of the valve spring 27 to press the diaphragm valve 14 against the valve seat 13 through the pressing member 16. Therefore, the first flow path 12a is closed.

Next, a concrete structure of the second control valve 2B will be described. The second control valve 2B is a normally opened three-port valve and has the second valve mechanism portion 4B and the second cylinder operating portion 5B. The second valve mechanism portion 4B includes a first flow path 12a, the second flow path 12b, and a third flow path 12c in the valve casing 7. The second flow path 12b and the second flow path 12b of the first control valve 2A communicate with each other and the first flow path 12a and the third flow path 12c communicate with ports 19b and 19c opening in the mounting face 7a of the valve casing 7. Because other structures of the second valve mechanism portion 4B are substantially similar to those of the first valve mechanism portion 4A, main similar components are provided with the same reference numerals as those of the first mechanism portion 4A to omit description of them.

On the other hand, in the second cylinder operating portion 5B, in a portion 25a at a tip end of the valve rod 25 extending from the cylinder casing 8 into the sleeve 9, a hole 40 is formed from a tip end face of the portion in an axial direction. A movable member 41 for coming in contact with the pressing member 16 is disposed for moving forward and rearward at a tip end portion of the hole 40 and a valve spring 27 is disposed between the movable member 41 and a hole bottom portion. A reference numeral 43 designates a stopper for locking the movable member 41 such that the movable member 41 does not come off the hole 40.

In the cylinder casing 8, a return spring 45 is provided between a plate 44 mounted to the valve rod 25 and a bottom of the cylinder bore 20 and the valve rod 25 is constantly repulsed rearward, i.e., in a valve opening direction by the return spring 45. A pressure chamber 33 is provided on a second pressure receiving face side, i.e., an upper face side of each the piston 24 and a breathing chamber 34 is provided on a first pressure receiving face side, i.e., a lower face side. The pressure chambers 33 and the breathing chambers 34 respectively communicate with the operating port 36 and the breathing port 37 respectively through connecting holes 38b and 39b formed in the cylinder casing 8.

Because other structures of the second cylinder operating portion 5B are substantially similar to those of the first cylinder operating portion 5A, like components are identified with like reference numerals and will not be described again.

In this second control valve 2B, in a non-operating state in which the pressure fluid is not supplied from the operating port 36 to each the pressure chamber 33, the valve rod 25 is moved rearward by the repulsing force of the return spring 45 as shown in FIG. 2 and the diaphragm valve 14 separates from the valve seat 13 due to its own repulsing force to thereby maintain the open state of the valve.

If the pressure fluid is supplied from the operating port 36 to each the pressure chamber 33, because the valve rod 25 is moved forward by the fluid pressure operating force acting on each the piston 24 and the movable member 41 pushes the pressing member 16 to press the diaphragm valve 14 against the valve seat 13, the valve is closed. At this time, the valve spring 27 is in a compressed state and the repulsing force of the valve spring 27 generates force for seating the diaphragm valve 14.

In this case, the operating port 36 and the breathing port 37 are common to the two control valves 2A and 2B and the two control valves 2A and 2B are operated simultaneously by supplying the pressure fluid to the one operating port 36. By sharing the operating port 36 as described above, the number of pipes is reduced, the structure is simplified, and piping cost is reduced. Because exhaust can be discharged outside a room through a pipe connected to the breathing port 37, it is possible to prevent pollution of the room due to exhaust to thereby keep this room clean when the combination valve is used in a clean room.

Because the second flow paths 12b and 12b of the two control valves 2A and 2B are directly connected in the valve casing 7, a length of connection of the flow paths is reduced. As compared with a prior-art apparatus in which adjacent control valves are connected by a long flow path provided in a unit substrate 18, dead-spots in a case of replacing process gas with purge gas supplied from the first flow path 12a of the second control valve 2B, for example, are reduced substantially and, as a result, replacing property is enhanced.

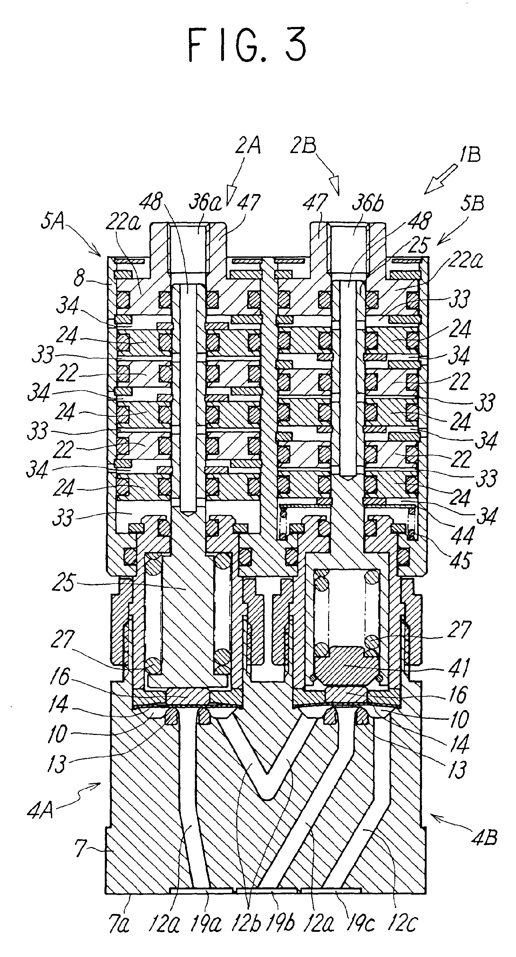

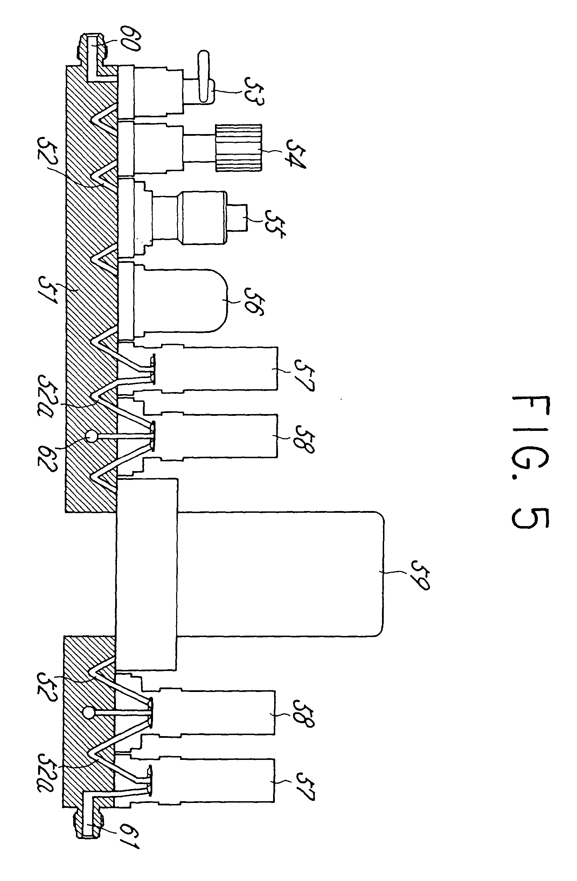

FIGS. 3 and 4 show a second embodiment of the combination valve. The combination valve 1B of the second embodiment is different from the combination valve 1A of the first embodiment in that two control valves 2A and 2B have separate operating ports 36a and 36b and the corresponding control valves 2A and 2B can be operated separately by the respective operating ports 36a and 36b in the combination valve 1B while the two control valves 2A and 2B are operated simultaneously by the one common operating port 36 in the combination valve 1A of the first embodiment.

In other words, boss portions 47 extending upward are formed at central portions of the partitions 22a positioned at the uppermost end on the upper face of the cylinder casing 8, the operating ports 36a and 36b are provided to the boss portions 47, and the operating ports 36a and 36b and the respective pressure chambers 33 are respectively connected through connecting holes 48 formed in the valve rods 25. Therefore, by supplying the pressure fluid from the operating ports 36a and 36b to the pressure chambers 33 in the respective control valves 2A and 2B, the two control valves 2A and 2B can be operated separately.

Because other structures and operations of the second embodiment are substantially similar to those of the first embodiment, like components are provided with the like reference numerals and will not be described again.

Although the breathing chambers 34 of the two control valves 2A and 2B are connected to the common breathing port 37 and exhaust is discharged in gross from the breathing port 37 in the above respective embodiments, it is also possible to separately provide breathing holes communicating with the respective breathing chambers 34 to a side face of the cylinder casing 8, for example, without providing such a breathing port 37.

Although the combination valves 1A and 1B of the first and second embodiments are the combination of the normally closed control valve 2A and the normally opened control valve 2B, the combination valves may be a combination of the normally closed control valves or a combination of the normally opened control valves. In these cases, one operating port may be shared by the two control valves like in the first embodiment or the operating ports may be separately provided to the respective control valves. Other modifications are similar to those in the cases of the first and second embodiments.

With the cylinder operated combination valve described above in detail, because the two control valves are incorporated into the casing and the two control valves are directly connected by the short flow path provided in the casing, there are advantages that mounting of the combination valve to the unit substrate is easy, space required for mounting may be small, and replaceability of purge gas is excellent.

## Claims

1. A cylinder operated combination valve formed from two control valves each including a valve mechanism portion for opening and closing a fluid flow path and a cylinder operating portion valve, wherein each valve mechanism portion includes a valve seat provided in the fluid flow path, a diaphragm valve for co-operating with the valve seat to open and close the fluid flow path and biased in a direction away from the valve seat, and a valve hole in which the valve seat and the diaphragm valve are provided, wherein each cylinder operating portion includes a valve rod for moving forward and back to open and close the diaphragm valve with a tip end portion which enters the valve hole, a plurality of pistons mounted to the valve rod, pressure chambers formed at one pressure receiving face of the pistons, an operating port for supplying pressure fluid to the pressure chambers, a connecting hole for connecting the operating port and the pressure chambers, and a valve spring acting on the diaphragm valve in a valve closing direction when the diaphragm valve is seated on the valve seat, wherein the two valve mechanism portions are in one valve casing, a fluid flow path for connecting the two valve mechanism portions being provided in the valve casing, and the two cylinder operating portions are incorporated into one cylinder casing connected to the valve casing.

2. A combination valve as claimed in claim 1, wherein the valve casing has a mounting face for mounting to a unit substrate of a process gas control unit on an end face opposite to a side connected to the cylinder casing and a plurality of ports communicating with the fluid flow path are provided to the mounting face.

3. A combination valve as claimed in either claim 1 or claim 2, wherein the cylinder casing has two parallel cylinder bores, an internal region of each cylinder bore is partitioned into a plurality of piston chambers by a plurality of partitions each formed in a disc-shaped member, and the pistons are each formed of a disc-shaped member of substantially the same form as the partitions and are housed in the piston chambers.

4. A combination valve as claimed in any preceding claim, wherein the two cylinder operating portions have a common operating port and the common operating port communicates with the pressure chambers of the two cylinder operating portions.

5. A combination valve as claimed in any one of claims 1 to 3, wherein the two cylinder operating portions have individual operating ports and each operating port communicates with the pressure chambers of the respective cylinder operating portion through the connecting hole formed in the valve rod.

6. A combination valve as claimed in any preceding claim, wherein the two control valves is either or both of a normally closed type in which the diaphragm valve is normally in a closed state or a normally opened type in which the diaphragm valve is normally in an open state.

7. A combination valve as claimed in claim 6, wherein at least one of the valves is a normally closed control valve, and wherein in said at least one valve the valve spring is disposed between the valve rod and the cylinder casing to thereby move the valve rod forward to seat the diaphragm valve on the valve seat and the pressure chambers are formed on first pressure receiving faces of the pistons such that a rearward operating force is generated in the valve rod by fluid pressure acting on the pistons.

8. A combination valve according to either claim 6 or claim 7, wherein at least one of the valves is a normally opened control valve, and wherein in said at least one valve the tip end of the valve rod is provided with a movable member for pressing the diaphragm valve in a closing direction is provided, the movable member is biased forward by the valve spring, and the pressure chambers are respectively formed on second pressure receiving faces of the pistons such that a forward operating force is generated in the valve rod by fluid pressure acting on the pistons.

9. A combination valve as claimed in any preceding claim, wherein a pressing member for transmitting force from the valve rod to the diaphragm valve is disposed between the tip end of said valve rod and the diaphragm valve.
